# EUROPEAN PATENT APPLICATION

(11) **EP 1 972 777 A2**
(43) Date of publication of application: **24.09.2008**
(21) Application number: 08004612.1
(22) Date of filing: 12.03.2008
(51) Int. Cl.: F02M 27/02

(54) **Fuel reformer and power source with fuel reformer**

(30) Priority: 19.03.2007 JP 2007070469
(71) Applicant: NISSAN MOTOR CO., LTD., Yokohama-shi Kanagawa-ken (JP)
(72) Inventor: Kobayashi, Chiaki, Atsugi-shi, Kanagawa 243-0123 (JP)
(74) Representative: Hager, Thomas Johannes

(57) **Abstract**

A fuel reformer of a power source includes: a gas-liquid separator which separates raw fuel into gas-phase fuel and liquid-phase fuel; and a molecular weight-increasing catalytic device which is provided downstream of the gas-liquid separator and includes a molecular weight-increasing catalyst which increases molecular weight of the gas-phase fuel. The fuel reformer is capable of improving combustion characteristics.

## Description

### BACKGROUND OF THE INVENTION

### 1. Field of the Invention

The present invention relates to a fuel reformer of a power source and a power source with the fuel reformer. More specifically, the present invention relates to a fuel reformer capable of improving combustion characteristics and a power source including the same.

### 2. Description of the Related Art

Heretofore, an internal combustion engine has been proposed which includes: a reformer reforming liquid fuel to produce hydrogen and reformed fuel containing high octane number component; a device which supplies the reformed fuel to the internal combustion engine; and a device which supplies the separated hydrogen to a fuel cell (see Japanese Patent Unexamined Publication No. 2003-184666).

Moreover, another internal combustion engine has been proposed which includes: a reformer reforming liquid fuel to produce reformed liquid fuel with a high octane number and hydrogen-rich reformed gas fuel; a gas-liquid separator which separates the reformed liquid fuel and gas fuel; and a device which supplies the reformed liquid fuel to the internal combustion engine (see Japanese Patent Unexamined Publication No. 2003-184667).

### BRIEF SUMMARY OF THE INVENTION

However, in vehicles described in Japanese Patent Unexamined Publications No. 2003-184666 and No. 2003-184667, there has been a problem that combustion characteristics such as suppression of knocking are not sufficient.

The present invention has been made in consideration for the problem inherent in the conventional technologies. It is an object of the present invention to provide a fuel reformer for a power source which is capable of improving the combustion characteristics and a power source including the fuel reformer.

According to one aspect of the present invention, there is provided a fuel reformer of a power source which generates heat during operation, the fuel reformer comprising: a gas-liquid separator which separates raw fuel into gas-phase fuel and liquid-phase fuel; and a molecular weight-increasing catalytic device which is provided downstream of the gas-liquid separator and includes a molecular weight-increasing catalyst which increases molecular weight of the gas-phase fuel.

### BRIEF DESCRIPTION OF THE SEVERAL VIEWS OF THE DRAWING

FIGS. 1A to 1C are schematic views showing examples of a molecular weight-increasing catalyst used in a fuel reformer of the present invention.
FIG. 2 is a schematic view showing the molecular weight-increasing catalyst applied to a honeycomb substrate.
FIG. 3 is a schematic view showing a constitution of a first embodiment of an internal combustion engine with a fuel reformer according to the present invention.
FIG. 4 is a schematic view showing a constitution of a second embodiment of the internal combustion engine with a fuel reformer according to the present invention.
FIG. 5 is a schematic view showing a constitution of a third embodiment of the internal combustion engine with a fuel reformer according to the present invention.
FIG. 6 is a schematic view showing a constitution of a fourth embodiment of the internal combustion engine with a fuel reformer according to the present invention.

### DETAILED DESCRIPTION OF THE INVENTION

With reference to the drawings, detailed description is given of a fuel reformer for a power source according to the present invention. Note that, in the drawings to be explained below, the same reference numerals will be assigned to ones having the same functions, and repeated descriptions thereof will be omitted.

The fuel reformer of the present invention is a fuel reformer for a power source generating heat during operation. The fuel reformer includes a gas-liquid separator which separates raw fuel into gas-phase fuel and liquid-phase fuel; and a molecular weight-increasing catalytic device which is provided downstream of the gas-liquid separator and includes a molecular weight-increasing catalyst increasing molecular weight of the gas-phase fuel. Gasoline as the raw fuel is usually an oil fraction having a boiling point range of 300 to 490K and contains a plurality of components including paraffin, olefin, and aromatic hydrocarbon. By including the aforementioned constitution, the present invention increases the molecular weight of a low molecular weight component among the gas-phase components of the raw fuel and increases an octane number (a value representing anti-knocking characteristics of fuel in a spark-ignition engine), thus improving the combustion characteristics such as knock suppression.

In this application, the "power source generating heat during operation" is an internal combustion engine or the like. The "gas-phase fuel" is hydrogen or a substance having 1 to 4 carbon atoms such as methane, ethane, ethylene, propane, propylene, or butane and, in this application, indicates low molecular weight hydrocarbon which remains gas at ordinary temperature and normal pressure (25°C, 1 atm). In the aforementioned example, the gas-phase fuel is hydrocarbon fuel other than hydrogen. The "liquid-phase fuel" is hydrocarbon fuel which remains liquid at ordinary temperature and normal pressure such as light oil (gas oil), gasoline, or alcohol fuel including biomass ethanol. Moreover, "increasing the molecular weight" means causing the gas-phase fuel to have a higher molecular weight after passing through the molecular weight-increasing catalyst than before.

In the fuel reformer of the internal combustion engine of the present invention, it is desirable that the molecular weight-increasing catalyst adsorbs and desorbs the gas-phase fuel with the molecular weight increased. Such a constitution makes it possible to supply gas-phase fuel having a high octane number to the internal combustion engine when needed and therefore achieve a further improvement in the combustion characteristics such as knock suppression. For example, in the case where the molecular weight-increasing catalyst adsorbs the gas-phase fuel with the molecular weight increased at low temperature and desorbs the same at high temperature, the internal combustion engine has an effect on not deteriorating cold startability. Such adsorption and desorption capability of the catalyst can be obtained by adding a component adsorbing molecules at low temperature and desorbing molecules at high temperature, such as zeolite, to the catalyst.

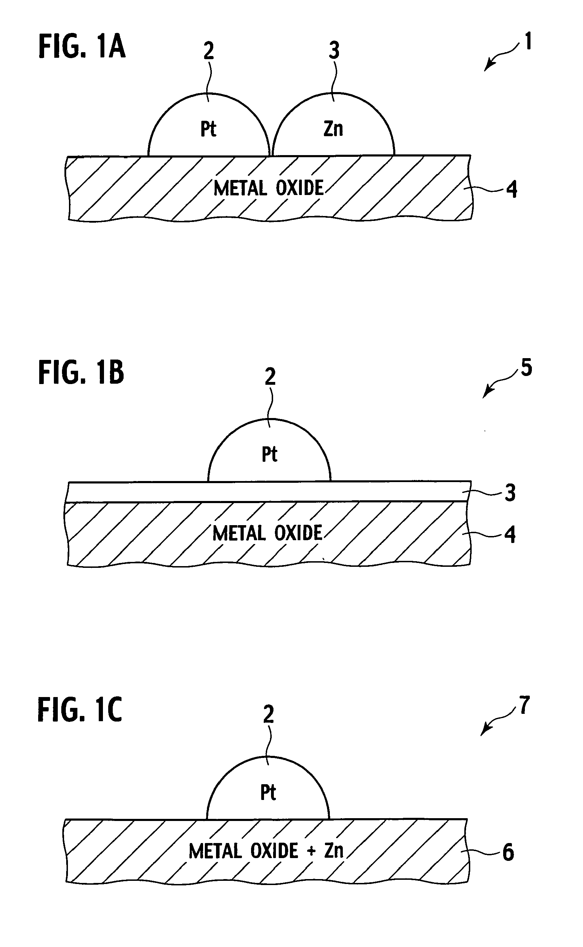

Furthermore, in the fuel reformer of the internal combustion engine of the present invention, it is desirable that the molecular weight-increasing catalyst contains platinum and zinc. By such a composition of the catalyst, the gas-phase fuel can increase in not only molecular weight but also octane number. Specifically, it is possible to combine low molecular weight hydrocarbon having 1 to 4 carbon atoms into hydrocarbon having 6 to 10 carbon atoms. As shown in FIG. 1A, one type of such a molecular weight-increasing catalyst is a catalyst 1 which contains: platinum 2; zinc 3; and a base material composed of a metal oxide 4 such as silica, alumina, ceria, zirconia, titania, magnesia, zeolite, or a combination thereof. Herein, platinum 2 and zinc 3 are both supported on the base material composed of the metal oxide 4. As shown in FIG. 1B, another type of the molecular weight-increasing catalyst is a catalyst 5 which contains: platinum 2; and a base material composed of the metal oxide 4 such as silica, alumina, ceria, zirconia, titania, magnesia, zeolite, or a combination thereof and a coating of zinc 3 on the surface of the metal oxide 4. Platinum 2 is supported on the base material. As shown in FIG. 1C, still another type of the molecular weight-increasing catalyst is a catalyst 7 which contains: platinum 2; and a base material composed of a composite oxide 6 of zinc and metal oxide such as silica, alumina, ceria, zirconia, titania, magnesia, zeolite, or a combination thereof. Platinum 2 is supported on the base material composed of the composite oxide 6. The above zeolite can be zeolite capable of adsorbing and desorbing gas-phase fuel with molecular weight increased such as mordenite, Y-type, USY, β, or ZSM-5(MFI) zeolite. The molecular weight-increasing catalyst of the present invention is not limited to the structures shown in FIGS. 1A to 1C and can be any catalyst which contains platinum, zinc, and the metal oxide.

Herein, in a method of manufacturing the catalyst 1 of FIG. 1A, first, metal oxide powder is mixed with a liquid mixture of platinum aqueous solution (dinitrodiammine platinum solution, etc) and zinc aqueous solution (zinc nitrate hydrate [Zn(NO₃)₂·H₂O] aqueous solution) and stirred. The thus obtained solution is heated to be dried. Powder of the catalyst 1 including platinum and zinc supported on the surface of the metal oxide can be thus obtained. In a method of manufacturing the catalyst 5 of FIG. 1B, first, metal oxide powder is mixed with zinc aqueous solution and stirred. The obtained solution is heated to be dried. Powder of the metal oxide coated with zinc can be thus obtained. The obtained powder of the metal oxide coated with zinc is mixed with platinum aqueous solution and stirred. The obtained solution is then heated to be dried, thus obtaining powder of the catalyst 5 including the metal oxide coated with zinc and platinum is supported on the zinc coating. In a method of manufacturing the catalyst 7 of FIG. 1C, composite oxide powder of the metal oxide and zinc is mixed with platinum solution and stirred. The obtained solution is heated to be dried, thus obtaining powder of the catalyst 7 including platinum supported on the surface of the composite oxide.

In the catalyst 1 of FIG. 1A, both of platinum 2 and zinc 3 are supported on the metal oxide 4, and platinum and zinc particles are adjacent to each other. In the present invention, even a catalyst including any one of platinum 2 and zinc 3 supported on the metal oxide 4 can also serve as a molecular weight-increasing catalyst 22. Moreover, in the case where the metal oxide is zeolite, the catalyst can also serve as the molecular weight-increasing catalyst 22 even when platinum 2 and zinc 3 are not supported. However, the catalyst including both of platinum 2 and zinc 3 supported on the metal oxide provides the highest performance in increasing the molecular weight of the low molecular weight hydrocarbon. It is therefore preferable to use the catalyst containing these components.

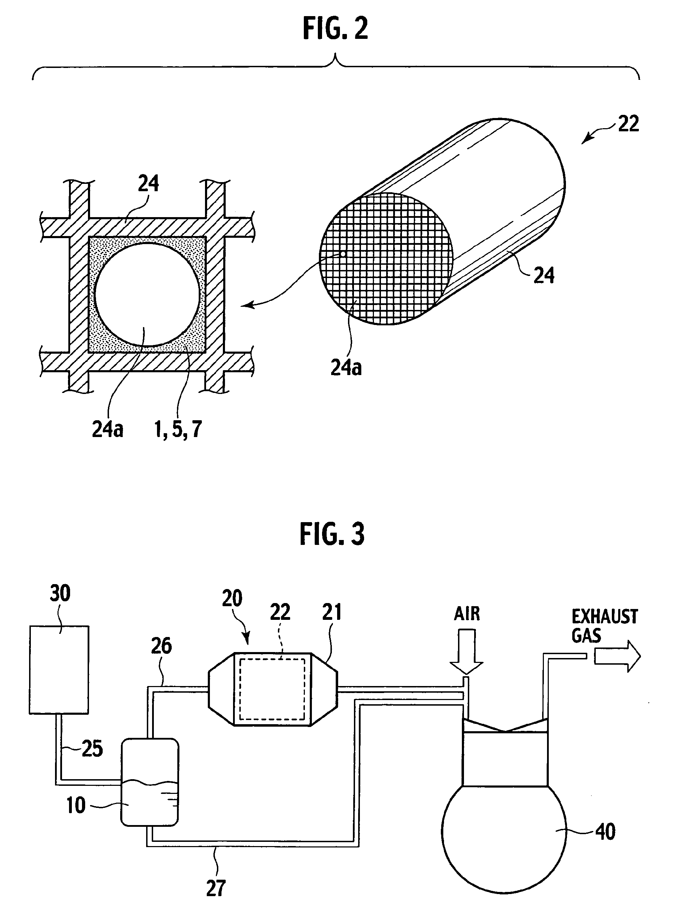

Moreover, the molecular weight-increasing catalyst of the present invention preferably includes a monolith substrate coated with the catalyst 1, 5, or 7 of FIGS. lA to 1C. Specifically, as shown in FIG. 2, it is preferable that the molecular weight-increasing catalyst includes a monolith substrate 24 having a plurality of cells 24a whose inner walls are coated with the catalyst 1, 5, or 7. This can considerably increase an area where the gas-phase fuel comes into contact with the catalyst 1, 5, or 7, thus efficiently increasing the molecular weight of low molecular weight hydrocarbon.

In the fuel reformer of an internal combustion engine of the present invention, the gas-liquid separator which separates gas-phase and liquid-phase fuel from the raw fuel can be a conventional one. In this application, the gas-liquid separator may also serve as a fuel tank. The gas-phase and liquid-phase fuel can be extracted from upper and lower sections of the fuel tank, respectively. Using such a structure that the space in the fuel tank serves as the gas-liquid separator can reduce the number of parts.

Next, a description is given of a power source with a fuel reformer of the present invention. The power source with a fuel reformer of the present invention includes a power source generating heat during operation; and a fuel reformer. The fuel reformer includes: a gas-liquid separator which separates raw fuel into gas-phase fuel and liquid-phase fuel; and a molecular weight-increasing catalytic device which is provided downstream of the gas-liquid separator and includes a molecular weight-increasing catalyst increasing the molecular weight of the gas-phase fuel. Such a constitution can increase the molecular weight of the gas-phase fuel, thus providing an internal combustion engine with the combustion characteristics improved such that knocking can be suppressed.

Next, a description is given of embodiments of an internal combustion engine with a fuel reformer according to the present invention using the drawings.

### (First Embodiment)

FIG. 3 is a schematic view showing a constitution of a first embodiment of the internal combustion engine with a fuel reformer according to the present invention. As shown in the drawing, the internal combustion engine with a fuel reformer of this embodiment includes: a gas-liquid separator 10; a molecular weight-increasing catalytic device 20; a fuel tank 30; and an engine 40 as an example of the internal combustion engine. As described above, the gas-liquid separator 10 provides a function to separate raw fuel into gas-phase fuel and liquid-phase fuel. The molecular weight-increasing catalytic device 20 includes the aforementioned molecular weight-increasing catalyst 22 and a casing 21 holding the molecular weight-increasing catalyst 22 inside. The molecular weight-increasing catalytic device 20 is provided in a gas-phase fuel passage 26 allowing the gas-liquid separator 10 and engine 40 to communicate with each other. The fuel tank 30 stores raw fuel such as light oil, gasoline, and alcohol fuel.

A description is given of an operation of this embodiment. In the internal combustion engine of the present invention, first, the raw fuel is supplied from the fuel tank 30 through a raw fuel passage 25 to the gas-liquid separator 10. The supplied raw fuel is separated into the gas-phase fuel and liquid-phase fuel in the gas-liquid separator 10. The separated gas-phase fuel is supplied through the gas-phase fuel passage 26 to the molecular weight-increasing catalytic device 20, which is provided downstream of the gas-liquid separator 10. The supplied gas-phase fuel is increased in molecular weight by the molecular weight-increasing catalyst 22. The gas-phase fuel with the molecular weight increased is supplied through the gas-phase fuel passage 26 to the engine 40. The liquid-phase fuel is supplied through a liquid-phase fuel passage 27 to the engine 40. The liquid-phase fuel, the gas-phase fuel with the molecular weight increased, and air are mixed and supplied to the engine 40 or separately supplied to the engine 40.

Preferably, the liquid-phase fuel and the gas-phase fuel with the molecular weight increased are supplied to the engine 40 according to operating conditions as follows. First, when the engine 40 is operating at low load in a low rev range (a range used for normal operation), the gas-phase fuel is supplied. The gas-phase fuel can be used in lean burn and has a characteristic of not causing knocking at a high compression ratio, thus allowing a considerable improvement in fuel consumption. In a high engine load range, the liquid-phase fuel is supplied. If the gas-phase fuel is used in this range, the intake charge efficiency is lowered, and the output is therefore reduced. Accordingly, the supplied fuel is preferably liquid-phase fuel with a high octane number. In the medium range other than such high and low load ranges, the gas-phase and liquid-phase fuel are used together. Specifically, the gas-phase fuel is mainly used while the liquid-phase fuel is supplied to cover a shortfall. Correctively using the gas-phase and liquid-phase fuel in such a way makes it possible to achieve a high compression ratio in any range, thus increasing the thermal efficiency. It is therefore possible to considerably improve the fuel consumption and increase the output. Moreover, using the gas-phase fuel at low-load operation and using the liquid-phase fuel at high-load operation especially make it possible to simultaneously achieve reduction in fuel consumption at low-load operation and an increase in output at high-load operation. The amounts of the liquid-phase fuel and gas-phase fuel supplied to the engine 40 can be controlled by valves (not shown) provided for the gas-phase and liquid-phase fuel passages 26 and 27, respectively.

The internal combustion engine of this embodiment may be provided with a bypass capable of supplying the raw fuel directly from the fuel tank 30 or gas-liquid separator 10 to the engine 40. This can further improve the cold startability.

### (Second Embodiment)

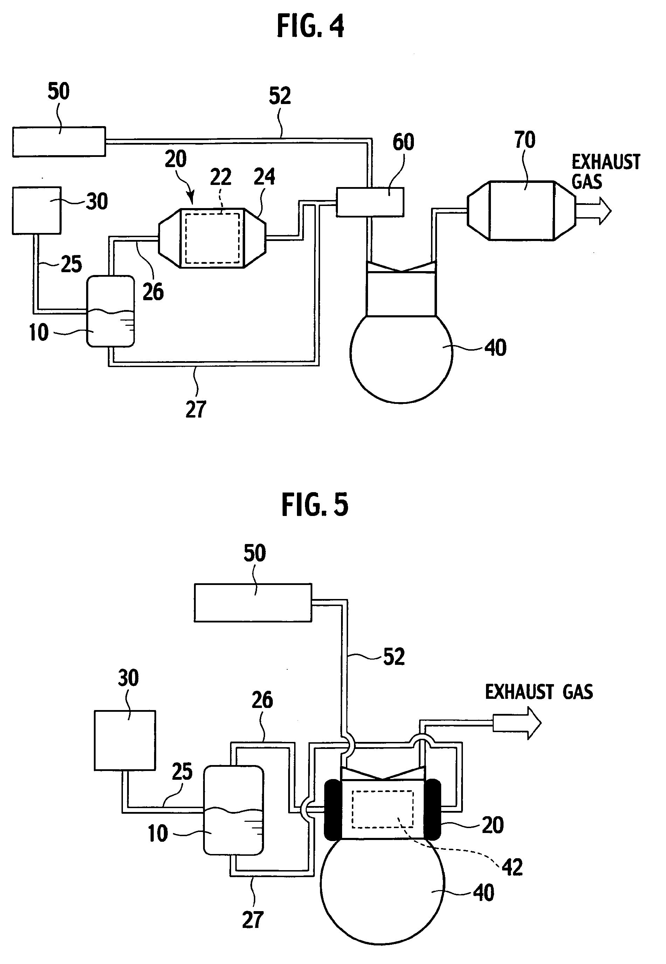

FIG. 4 is a schematic view showing a constitution of a second embodiment of the internal combustion engine with a fuel reformer according to the present invention. As shown in the drawing, the internal combustion engine of this embodiment includes: the gas-liquid separator 10; the molecular weight-increasing catalytic device 20; the fuel tank 30; the engine 40; a compressor 50; a vaporizer 60; and an exhaust catalytic converter 70. The compressor 50 communicates with the vaporizer 60 through the gas-phase fuel passage 26 and provides a function to pump air to the vaporizer 60. The vaporizer 60 communicates with the molecular weight-increasing catalytic device 20 through the gas-phase fuel passage 26 and is supplied with the gas-phase fuel with the molecular weight increased by the molecular weight-increasing catalytic device 20. The gas-liquid separator 10 communicates with the vaporizer 60 through the liquid-phase fuel passage 27 and supplies the liquid-phase fuel to the vaporizer 60. The exhaust catalytic converter 70 provides a function to oxidize hydrocarbon and carbon monoxide contained in exhaust gas from the engine 40 into carbon dioxide and water and reducing nitrogen oxide contained in the exhaust gas to nitrogen.

A description is given of an operation of this embodiment. In the internal combustion engine of this embodiment, first, raw fuel is supplied from the fuel tank 30 through the raw fuel passage 25 to the gas-liquid separator 10. The supplied raw fuel is separated into the gas-phase fuel and liquid-phase fuel in the gas-liquid separator 10. The separated gas-phase fuel is supplied through the gas-phase fuel passage 26 to the molecular weight-increasing catalytic device 20, which is provided downstream of the gas-liquid separator 10, and is increased in molecular weight by the molecular weight-increasing catalyst 22. The gas-phase fuel with the molecular weight increased is supplied through the gas-phase fuel passage 26 to the vaporizer 60. The liquid-phase fuel is supplied through the liquid-phase fuel passage 27 to the vaporizer 60. On the other hand, air compressed by the compressor 50 is also supplied to the vaporizer 60. Thereafter, the liquid-phase fuel, gas-phase fuel with the molecular weight increased, and air are mixed in the vaporizer 60 for vaporization. The gas mixture of the liquid-phase fuel, gas-phase fuel, and air is supplied to the engine 40. The gas mixture is burned in the engine 40 into exhaust gas. The exhaust gas passes through the exhaust gas catalyst converter 70 for decontamination and is then emitted to the outside.

The vaporizer 60 can be a device to vaporize liquid-phase fuel by heat of the exhaust gas.

### (Third Embodiment)

FIG. 5 is a schematic view showing a constitution of a third embodiment of the internal combustion engine with a fuel reformer according to the present invention. As shown in the drawing, the internal combustion engine of this embodiment includes: the gas-liquid separator 10; the molecular weight-increasing catalytic device 20; the fuel tank 30; the engine 40; and the compressor 50. The molecular weight-increasing catalytic device 20 is provided near a water jacket 42 of the engine 40.

A description is given of an operation of this embodiment. In the internal combustion engine of this embodiment, first, fuel supplied from the fuel tank 30 to the gas-liquid separator 10 is separated by the gas-liquid separator 10 into gas-phase fuel and liquid-phase fuel. In the molecular weight-increasing catalytic device 20 provided downstream of the gas-liquid separator 10 in the vicinity of the water jacket 42 of the engine 40, the gas-phase fuel is increased in molecular weight by the molecular weight-increasing catalyst 22 warmed. The gas mixture of the liquid-phase fuel, gas-phase fuel with molecular weight increased, and air compressed by the compressor 50 is supplied to the engine 40. In this embodiment, the molecular weight-increasing catalytic device 20 is provided in the vicinity of the water jacket 42, which is provided in upper part of the engine 40 and filled with coolant to be circulated to cylinder block and cylinder head. The water jacket 42 is heated by thermal energy of the engine. Accordingly, by providing the molecular weight-increasing catalyst 22 near the water jacket 42, the catalyst 22 is warmed by heat transferred from the water jacket 42 to enhance catalytic activities of platinum and zinc. In the case of using zeolite for the molecular weight-increasing catalyst 22, when the water jacket 42 is not warmed enough immediately after the engine starts, the molecular weight-increasing catalyst 22 is cold, and the gas-phase fuel with the molecular weight increased can be adsorbed by the catalyst 22. Thereafter, when the water jacket 42 is warmed enough, the molecular weight-increasing catalyst 22 becomes hot, and the gas-phase fuel can be desorbed from the catalyst 22.

### (Fourth Embodiment)

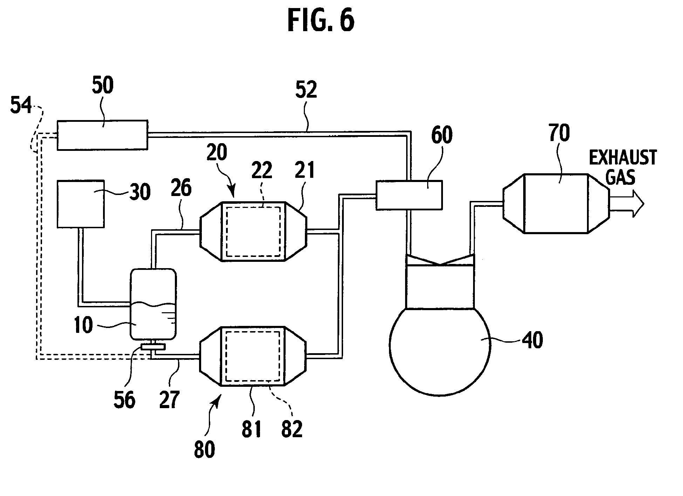

FIG. 6 is a schematic view showing a constitution of a fourth embodiment of the internal combustion engine with a fuel reformer according to the present invention. As shown in the drawing, the internal combustion engine of this embodiment includes: the gas-liquid separator 10; the molecular weight-increasing catalytic device 20; the fuel tank 30; the engine 40; the compressor 50; the vaporizer 60; the exhaust catalytic converter 70; and an octane number-increasing catalytic device 80. The octane number-increasing catalytic device 80 includes an octane number-increasing catalyst 82 and a casing 81 holding the octane number-increasing catalyst 82 inside. The octane number-increasing catalytic device 80 is provided in the liquid-phase fuel passage 27 which allows the gas-liquid separator 10 and vaporizer 60 to communicate with each other. The octane number-increasing catalyst 82 in the octane number-increasing catalytic device 80 is a catalyst which allows the liquid-phase fuel to pass therethrough and increases the octane number of the liquid-phase fuel. The internal combustion engine of this embodiment further includes an oxygen passage 54 to supply oxygen to the octane number-increasing catalytic device 80. The oxygen passage 54 is connected to the liquid-phase fuel passage 27 to allow the compressor 50 and octane number-increasing catalytic device 80 to communicate with each other and supplies air to the octane number-increasing catalytic device 80. Furthermore, it is preferable that the internal combustion engine includes a vaporizer 56 for vaporization of the liquid-phase fuel between the gas-liquid separator 10 and a joint portion of the liquid-phase fuel passage 27 and oxygen passage 54.

A description is given of an operation of this embodiment. In the internal combustion engine of this embodiment, first, fuel supplied from the fuel tank 30 to the gas-liquid separator 10 is separated into gas-phase fuel and liquid-phase fuel by the gas-liquid separator 10. The gas-phase fuel is increased in molecular weight by the molecular weight-increasing catalyst 22 in the molecular weight-increasing catalytic device 20, which is provided downstream of the gas-liquid separator 10. On the other hand, the liquid-phase fuel is vaporized by the vaporizer 56, which is provided downstream of the gas-liquid separator 10, and then mixed with air (oxygen) pumped from the compressor 50 to be introduced into the octane number-increasing catalyst 82. In the octane number-increasing catalyst 82, the gas mixture of the liquid-phase fuel and oxygen reacts to increase the octane number of the liquid-phase fuel. The liquid-phase fuel with the octane number increased and the gas-phase fuel with the molecular weight increased are then supplied to the vaporizer 60. On the other hand, air compressed by the compressor 50 is also supplied to the vaporizer 60. Thereafter, the liquid-phase fuel with the octane number increased, the gas-phase fuel with the molecular weight increased, and the air are mixed in the vaporizer 60. The gas mixture of the liquid-phase fuel, gas-phase fuel, and air is supplied to the engine 40. The gas mixture is burned in the engine 40 into exhaust gas. The exhaust gas passes through the exhaust catalytic converter 70 for decontamination and is then emitted to the outside.

Compared to the internal combustion engine of the second embodiment, the internal combustion engine of this embodiment is characterized by further including the high-octane number-increasing catalytic device 80. This can increase the octane number of the liquid-phase fuel and improve the anti-knocking property.

The octane number-increasing catalyst 82 can be a catalyst containing rhodium. Furthermore, it is desirable that a ratio of a number of oxygen molecules with respect to a number of molecules of liquid-phase fuel (that is, number of oxygen molecules/number of molecules of liquid-phase fuel), which are introduced into the octane number-increasing catalyst 82, is 0.005 to 1.0. When the ratio is larger than 1.0, the liquid-phase fuel can burn, and when the ratio is less than 0.005, the octane number is not increased in some cases.

The vaporizer 56 can be an injector which sprays liquid-phase fuel for vaporization.

In this embodiment, the vaporizer 60, in which the liquid-phase fuel with the octane number increased, the gas-phase fuel with the molecular weight increased, and air are mixed, is provided. However, it is only necessary to connect the gas-phase fuel, liquid-phase fuel, air passages 26, 27, and 52 without especially providing the vaporizer 60. This enables simplification and lightening of the system.

Next, the fuel reformer of the present invention is described in more detail using examples.

### (Example 1)

MFI zeolite (Si/A1 ratio: 40) was compressed into a disk and crushed to particles with particle diameter of 36 to 70 µm. Subsequently, 0.1 g of the crushed MGI zeolite and 0.13 g of silica sand were mixed and filled in a glass tube. Thereafter, nitrogen with 2% oxygen was flown through the glass tube at 300 cm³/min. The mixture of MFI zeolite and silica sand was heated at 400°C for 30 min in nitrogen atmosphere for activation treatment. The glass tube was then cooled to 50°C in nitrogen atmosphere, thus obtaining molecular weight-increasing catalyst used in the examples.

The obtained molecular weight-increasing catalyst was installed in the aforementioned molecular weight-increasing catalytic device of an internal combustion engine with a fuel reformer, thus obtaining the internal combustion engine of this example.

### (Example 2)

An internal combustion engine of Example 2 was obtained by repeating the same process as that of Example 1 except that MFI zeolite (Si/A1 ratio: 40) with 2 wt% platinum supported thereon was used instead of the MFI zeolite (Si/Al ratio: 40).

### (Example 3)

An internal combustion engine of Example 3 was obtained by repeating the same process as that of Example 1 except that MFI zeolite (Si/A1 ratio: 40) with 20 wt% zinc supported thereon was used instead of the MFI zeolite (Si/A1 ratio: 40).

### (Example 4)

An internal combustion engine of Example 4 was obtained by repeating the same process as that of Example 1 except that MFI zeolite (Si/A1 ratio: 40) with 2 wt% platinum and 20 wt% zinc supported thereon as shown in FIG. 1A was used instead of the MFI zeolite (Si/A1 ratio: 40).

### (Example 5)

An internal combustion engine of Example 5 was obtained by repeating the same process as that of Example 1 except that MFI zeolite (Si/Al ratio: 40) with 2 wt% platinum and 20 wt% zinc supported thereon as shown in FIG. 1B was used instead of the MFI zeolite (Si/Al ratio: 40). Herein, this MFI zeolite with 2 wt% platinum and 20 wt% zinc supported thereon was obtained by coating MFI zeolite (Si/A1: 40) with zinc and then causing platinum to be supported on the zinc layer.

### (Performance Evaluation)

The molecular weight-increasing catalyst used in each example was heated starting from 100°C with helium gas containing 0.5 wt% butane being supplied at 300 cm³/min, and outlet gas was analyzed by gas chromatography.

In the molecular weight-increasing catalyst of Examples 1 to 5, butane (research octane number: 93.8) and xylene (research octane number: 116.4) as a combination of two butane molecules were detected. In the molecular weight-increasing catalyst used in each internal combustion engine with a gas reforming device of the Examples 4 and 5, there were 0.8 vol% of components with a high-boiling point of 200°C.

Hereinabove, the present invention is described with some embodiments and examples. However, the present invention is not limited to these, and various modifications can be made within the scope of the present invention. For example, in the aforementioned examples, the gas-phase fuel was butane. However, the gas-phase fuel can be methane, ethane, ethylene, propane, propylene, or the like.

The entire content of a Japanese Patent Application No. P2007-070469 with a filing date of March 19, 2007 is herein incorporated by reference.

Although the invention has been described above by reference to certain embodiments of the invention, the invention is not limited to the embodiments described above and modifications may become apparent to these skilled in the art, in light of the teachings herein. The scope of the invention is defined with reference to the following claims.

## Claims

1. A fuel reformer of a power source which generates heat during operation, the fuel reformer comprising:
a gas-liquid separator (10) which separates raw fuel into gas-phase fuel and liquid-phase fuel; and
a molecular weight-increasing catalytic device (20) which is provided downstream of the gas-liquid separator (10) and includes a molecular weight-increasing catalyst (22) which increases molecular weight of the gas-phase fuel.

2. The fuel reformer according to claim 1,
wherein the molecular weight-increasing catalyst (22) adsorbs and desorbs the gas-phase fuel with the molecular weight increased.

3. The fuel reformer according to claim 1 or 2,
wherein the molecular weight-increasing catalyst (22) comprises platinum (2) and zinc (3).

4. The fuel reformer according to claim 3,
wherein the molecular weight-increasing catalyst (22) comprises: platinum (2); zinc (3); and a base material composed of at least one selected from the group consisting of silica, alumina, ceria, zirconia, titania, magnesia, and zeolite, and
platinum (2) and zinc (3) are supported on the base material.

5. The fuel reformer according to claim 3,
wherein the molecular weight-increasing catalyst (22) comprises: platinum (2); and a base material composed of at least a metal oxide (4) selected from the group consisting of silica, alumina, ceria, zirconia, titania, magnesia, and zeolite, a surface of the metal oxide (4) being coated with zinc (3), and
platinum (2) is supported on the base material.

6. The fuel reformer according to claim 3,
wherein the molecular weight-increasing catalyst (22) comprises: platinum (2); and a base material composed of a composite oxide of zinc (3) and at least a metal oxide (4) selected from the group consisting of silica, alumina, ceria, zirconia, titania, magnesia, and zeolite, and
platinum (2) is supported on the base material.

7. The fuel reformer according to any one of claims 1 to 6,
wherein the gas-liquid separator (10) serves as a fuel tank.

8. A power source with a fuel reformer, comprising:
a power source (40) which generates heat during operation; and
a fuel reformer according to any one of claims 1 to 7.
